# FASCICULE DE BREVET EUROPEEN

(11) **EP 2 303 651 B1**
(45) Date de publication et mention de la délivrance du brevet: **20.03.2013**
(21) Numéro de dépôt: 09772275.5
(22) Date de dépôt: 09.06.2009
(51) Int. Cl.: B64F 1/00, B60T 3/00, G08B 13/196

(54) **SUPPORT DE FIXATION POUR INSTALLER UN ÉQUIPEMENT SUR UN TRAIN D'ATTERRISSAGE D'AÉRONEF, UTILISATION D'UN TEL SUPPORT DE FIXATION ET ENSEMBLE COMPRENANT UN DISPOSITIF DE SURVEILLANCE ET UN TEL SUPPORT DE FIXATION**
BEFESTIGUNGSHALTERUNG ZUR MONTAGE EINES GERÄTS AUF EINEM FLUGZEUGFAHRWERK, VERWENDUNG EINER DERARTIGEN BEFESTIGUNGSHALTERUNG SOWIE ANORDNUNG MIT EINEM ÜBERWACHUNGSGERÄT UND EINER DERARTIGEN BEFESTIGUNGSHALTERUNG
ATTACHMENT SUPPORT FOR INSTALLING EQUIPMENT ON AIRCRAFT LANDING GEAR, USE OF SUCH AN ATTACHMENT SUPPORT AND ASSEMBLY COMPRISING A MONITORING DEVICE AND ONE SUCH ATTACHMENT SUPPORT

(30) Priorité: 10.06.2008 FR 0853852
(43) Date de publication de la demande: 06.04.2011
(73) Titulaire: Blue Green Technology, 33300 Bordeaux (FR)
(72) Inventeur: SAUBADE, Frédéric, 33950 Lege Cap Ferret (FR)
(74) Mandataire: Schmit, Christian Norbert Marie
(86) Numéro de dépôt international: PCT/EP2009/057090
(87) Numéro de publication internationale: WO 2010/000575

(56) Documents cités:
- FR-A- 529 235
- JP-A- 2001 301 577
- US-A- 2 461 248
- US-A- 2 522 328
- US-A- 2 998 102
- US-B1- 6 545 601
- US-B1- 6 725 979

## Description

La présente invention concerne un support de fixation pour installer un équipement sur un train d'atterrissage d'aéronef, ainsi que l'utilisation d'un tel support de fixation pour bloquer les roues d'un train d'atterissage d'aéronef.

L'invention concerne encore un ensemble comprenant un dispositif de surveillance et un tel support de fixation. Un dispositif de blocage de roue de l'art antérieur est connu de US 2998102.

Cet ensemble est particulièrement adaptée pour être monté sur un train d'atterrissage avant d'aéronef, tel q'un avion de transport civil, un avion militaire ou un hélicoptère.

On connaît des systèmes de surveillance d'un avion lorsqu'il est en arrêt (voir par exemple le document US 6545601), en particulier lorsque qu'il est laissé sans surveillance ou peu surveillé pendant un temps déterminé. En particulier, pour certains types d'avions tels que les avions d'aide humanitaire ou les avions qui sont amenés souvent à s'arrêter dans des zones sensibles, ces systèmes de surveillance permettent d'éviter les risques entraînés par les intrusions dans l'avion, tels que le vol de matériels à bord de l'avion, le vol de marchandises, l'installation d'éléments dangereux dans l'avions tels que la bombe ou même l'introduction de passagers clandestins dans l'avions.

Ainsi lorsque des intrus sont entrés dans un espace de sécurité défini préalablement autour de l'avion ou lorsque l'un des accès de l'avions est ouvert, le système de surveillance est capable de détecter ces intrusions, puis de manière simultanée, il stocke les informations dans une unité de mémoire afin de pouvoir les restituer ultérieurement a la fin de la surveillance et émet des signaux d'alarme à un centre de surveillance pour signaler les intrusions détectées, en précisant notamment le nombre d'intrus, leur localisation par rapport à l'avion. Les opérateurs du centre de surveillance peuvent alors prendre les mesures nécessaires et appropriées par rapport à la situation. De cette façon, il n'est donc plus nécessaire de disposer d'une surveillance humaine de manière permanente autour de l'avion. Cette surveillance est effectuée à distance et centralisée. Le système de surveillances peut également déclencher de manière simultanée un signal sonore pour faire partir les intrus. La présence d'un tel système de surveillance est également utile pour dissuader les éventuelles intrusions.

On connaît de l'état de la technique comme système de surveillance, les systèmes de surveillance à capteurs. Un tel système de surveillance comporte un ensemble de capteurs qui sont disposés en des endroits stratégiques tels que les ouvertures des portes et les différents accès à l'intérieur de l'avion tels que les trappes au niveau des trains d'atterrissage. Ces capteurs sont reliés par un réseau de communication à un central de surveillance. Ainsi lorsque l'un des capteurs détecte un changement d'état de la porte ou de l'accès associé à ce capteur, le capteur émet un signal d'alarme vers le central de surveillance. Le principal inconvénient de ce système de surveillance est qu'il est limité uniquement à la surveillance des accès et des ouvertures. Une partie importante de l'avion telle que les moteurs disposés sous les ailes ou d'autres éléments structuraux autre que les portes et les accès ne sont pas couverts par ce type de système de surveillance. Un autre problème technique posé concerne l'insuffisance des informations collectées et transmises par un tel système de surveillance. En effet les opérateurs et/ou les utilisateurs recevant les informations émises par les capteurs apprennent uniquement un changement d'état des zones munies de capteurs à telle date et à telle heure. Ils n'ont pas accès aux informations telles que par exemple le nombre d'intrus, leur localisation par rapport à l'avion.

Une autre solution connue est d'utiliser un système de surveillance périmétrique. Un tel système de surveillance comporte généralement un ensemble de capteurs particulier qui permettent de détecter le mouvement d'un intrus, de capturer des images. L'agencement de ces capteurs les uns par rapport aux autres est tel qu'ils permettent de délimiter un champ de surveillance autour de l'avion. Le système comporte des moyens d'enregistrement de données et des moyens qui permettent de transmettre les informations vers un central de surveillance ou autres destinataires. Ainsi lorsqu'un intrus franchit la barrière qui délimite cet espace, un signal d'alarme est produit. Le système de surveillance comporte également des moyens d'alimentation tels qu'une batterie des différents composants électroniques constituant le système de surveillance. Dans l'état de la technique, un tel système est installé sur l'avion, et plus précisément sur le corps du fuselage. Il est en position inactive lorsque l'avion est en vol et il est en position de fonctionnement lorsque l'avion est en arrêt.

Afin de ne pas être sujet à une demande de certification au même titre que les autres éléments de l'avion, l'installation du système sur l'avion est passive. Par installation passive, on entend par une installation où les différents éléments du système sont indépendants de l'avion et qu'elle ne génère pas d'interférence avec le fonctionnement de l'avion lorsque l'avion est en vol. De ce fait, une partie des éléments qui ont besoin d'accès sur l'extérieur est contenu dans une sorte de carter qui vient se fixer sur la paroi du fuselage.

De tels systèmes de surveillance ne se révèlent pas être une solution optimale en terme d'impact aérodynamique sur l'avion et en terme de contraintes dimensionnelles et ce pour plusieurs raisons. En effet le carter une fois installé sur la paroi du fuselage, par son architecture est en sailli par rapport au profil du fuselage, perturbant de manière plus ou moins significative l'écoulement aérodynamique dans cette zone du fuselage, et de ce fait induit des traînées aérodynamiques. Afin de minimiser la dimension de ce carter, une solution préconisée est de loger dans le fuselage une partie des éléments n'ayant pas besoin d'accès vers l'extérieur tels que les batteries. Par conséquent, il est nécessaire de réaliser un logement dans le fuselage, nécessitant donc une intervention sur le corps de l'avion. Ce problème aérodynamique impose également une contrainte au niveau de l'agencement interne entre les différents composants constituant le système de surveillance.

Une solution adoptée est de rendre le carter amovible, de manière à ne pas gêner l'avion pendant son vol, et de le réinstaller une fois l'avion en arrêt. Dans cette solution, il est nécessaire de prévoir des moyens de câblage entre le carter et les éléments restants dans le fuselage. En outre il est nécessaire également de prévoir des moyens pour obturer le logement après le retrait du carter. De tels moyens lorsqu'ils sont dans la position de fermeture doivent présenter également un profil qui soit dans le prolongement de la paroi du fuselage. Un tel carter amovible rend son installation sur l'avion relativement complexe et peut nécessiter la présence de plusieurs opérateurs.

Dans l'invention, on cherche à fournir une alternative à l'installation du système de surveillance sur l'avion qui permet de remédier les inconvénients cités ci-dessus.

Pour cela, l'invention propose un ensemble comprenant un dispositif de surveillance destiné à être installé sur un train d'atterrissage avant d'un aéronef au moyen d'un support de fixation, simple dans sa conception et dans son mode opératoire, permettant de résoudre les inconvénients de l'art antérieur cités ci-dessus, tout en permettant une fixation fiable et sécurisant du dispositif de surveillance, à l'extérieur de l'avion sans remettre en cause l'intégrité de l'avion à surveiller.

A cet effet, l'invention concerne un support de fixation pour installer de manière temporaire un équipement sur une roue d'un véhicule terrestre ou un aéronef, caractérisé en ce qu'il comprend :
- deux éléments d'appuis reliés entre eux par un axe formant un plan l'un avec l'autre, lesdits éléments étant destinés à venir prendre appui respectivement sur le sol et contre un pneumatique d'une roue dudit train d'atterrissage, lesdites éléments s'étendant selon un axe parallèle à l'axe de la roue, et
- des moyens de déplacement permettant de placer lesdits éléments dans une première position inactive dans laquelle les deux éléments ne prennent pas appui sur le pneumatique, et une deuxième position dite position de blocage dans laquelle les deux éléments prennent appui sur le pneumatique de manière à bloquer la roue, tangentiellement audit pneumatique.

De cette façon, l'équipement est solidarisé par l'intermédiaire du support de fixation dont l'installation sur le véhicule ou l'aéronef ne nécessite de ménager un logement spécifique. En outre cette installation temporaire est particulièrement avantageuse dans le cadre de l'utilisation pour un aéronef, en effet elle permet de ne pas générer de perturbations aérodynamiques.

Avantageusement, la masse de l'avion permet de stabiliser l'équipement et d'interdire la génération de vibrations susceptibles de déclencher de fausses alarmes.

En outre, lesdits moyens comporte un bras de levier, une extrémité dudit bras étant reliée à l'extrémité d'un élément en forme de U, les deux bras dudit élément en forme de U étant montés de manière rotative respectivement sur les extrémités de l'un des deux éléments d'appui, ledit bras de levier étant destiné à être déplacé d'une position horizontale dans laquelle ledit bras de levier s'étend parallèlement à l'axe, vers une position verticale, entraînant la rotation dudit élément en forme U d'une position où ledit élément U est dans le même plan que lesdits éléments d'appui en position inactive vers une position où la base dudit élément en forme de U est en appui avec la surface du sol, surélevant ainsi ledit élément d'appui correspondant pour placer lesdits éléments d'appui en position de blocage.

Selon une réalisation de l'invention, ledit bras de levier constitue également un organe de support destiné à recevoir ledit équipement.

Avantageusement, lesdits éléments d'appui ayant une forme cylindrique, comportent au moins une partie des surfaces d'appui recouvertes d'un matériau antidérapant.

Selon une forme préférée de l'invention, ladite roue est une des roues d'un train d'atterrissage avant d'aéronef. Ainsi de cette façon, le support de fixation de l'invention permet d'installer de manière temporaire le dispositif de surveillance sur l'aéronef tout en étant complètement indépendant de l'aéronef.

Selon une réalisation de l'invention, ledit équipement est un dispositif de surveillance destiné à détecter des intrusions dans un espace de sécurité défini autour dudit aéronef.

L'invention concerne également l'utilisation du support de fixation pour bloquer les roues d'un train d'atterrissage d'aéronef en période de stationnement. Selon l'invention, on utilise au moins un support de fixation tel que décrit ci-dessus dont les éléments d'appui sont destinés à prendre appui respectivement sur le sol et contre un pneumatique d'une roue dudit train d'atterrissage de manière à bloquer l'avancement de ladite roue.

Selon une réalisation, ledit train d'atterrissage est un train avant dudit aéronef. Toutefois, dans un autre exemple de réalisation, le dispositif de blocage comporte trois supports de fixation, chacun des supports est monté par exemple sur une roue d'un train pour bloquer l'avancement dudit aéronef en arrêt.

L'invention concerne encore un ensemble comprenant un dispositif de surveillance et un support de fixation destiné à être monté sur la roue d'un train d'atterrissage d'aéronef tel que décrit ci-dessus. Selon l'invention, ledit dispositif de surveillance est monté sur le bras de levier en position verticale dudit support de fixation par l'intermédiaire d'un plateau, ledit support étant monté sur ladite roue dudit train de sorte que ledit dispositif est déporté par rapport à la jambe dudit train, et
- ledit dispositif de surveillance comporte un ensemble de détecteur infrarouge, un ensemble de capteurs d'images, des moyens de réception et de transmission d'informations, un mémoire de stockage et un calculateur.

Selon une réalisation préférée de l'invention, ledit dispositif comporte de plus des moyens aptes à initialiser un réseau de capteurs placés dans l'aéronef et à recevoir des informations émises par lesdits capteurs.

De préférence, lesdits capteurs sont des capteurs d'état d'ouverture ou de fermeture des accès externes de l'avion, tels que les portes et les trappes. Chacun des capteurs formant ledit réseau est muni d'un émetteur radio courte distance, d'un actionneur mécanique et d'une source d'énergie telle qu'une pile jetable.

Selon une réalisation de l'invention, ledit plateau comporte sur sa partie inférieure un élément de fixation destiné à venir se fixer sur l'extrémité dudit bras levier en position verticale.

Avantageusement, ledit bras levier comporte sur au moins une partie du côté de son extrémité libre un logement, ledit logement étant destiné à recevoir une source d'alimentation telle qu'une batterie pour alimenter ledit dispositif de surveillance. De cette façon, le dispositif de surveillance est autonome en terme de fonctionnement, qui peut aller jusqu'à à titre d'exemple jusqu'à quinze jours.

L'invention sera décrite plus en détail en référence aux dessins annexés dans lesquels:
- la figure 1 représente schématiquement une vue de devant d'un ensemble comprenant un dispositif de surveillance et un support de fixation selon l'invention, l'ensemble étant monté sur la roue d'un train d'atterrissage d'aéronef ;
- la figure 2 représente schématiquement le support de fixation de la Figure 1 tout seul en position dite de repos;
- la figure 3 représente schématiquement de profil le support de fixation de la Figure 1 tout seul en position dite de blocage;
- la figure 4 représente une vue partiellement éclatée et en perspective du support de fixation de la Figure 1 ;
- la figure 5 représente schématiquement un exemple d'espace de sécurité défini par le dispositif de surveillance selon l'invention autour d'un aéronef tel qu'un avion civil ;
- la figure 6 représente schématiquement une vue en perspective du dispositif de surveillance.

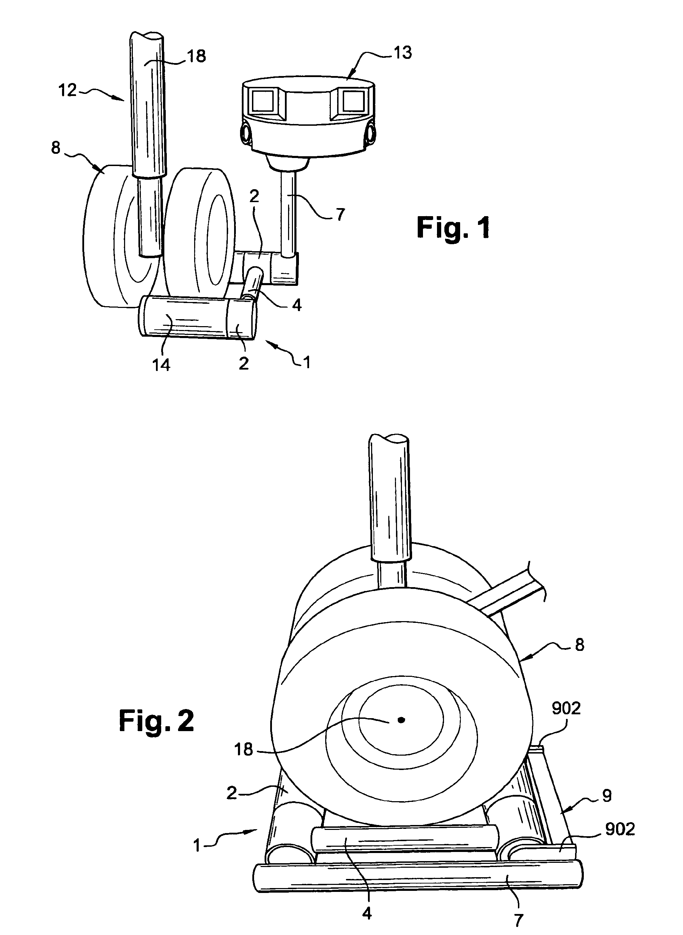

La Figure 1 montre un ensemble comprenant un équipement 13 monté sur un support de fixation 1 selon l'invention. Cet ensemble est destiné à être installé de manière temporaire sur un train d'atterrissage d'aéronef 12 tel qu'un avion civil, un avion militaire ou un hélicoptère, plus précisément sur l'une des roues 8 d'un train d'atterrissage avant d'aéronef lorsque ce dernier est au sol et en stationnement.

Il est possible de prévoir d'autres zones de fixation dudit support par rapport à l'avion en fonction de la nature de l'équipement et de son application, par exemple sur les trains d'atterrissage situés sous la voilure de l'aéronef ou situés sous le fuselage.

On peut également envisager d'installer ce support de fixation sur la roue d'un véhicule automobile.

Le support de fixation comporte deux éléments d'appuis 2 reliés entre eux par un axe 4. Les deux éléments 2 forment un plan l'un avec l'autre. Le support de fixation comporte des moyens de déplacement 7, 9 permettant de placer les deux éléments 2 dans une première position dite de repos dans laquelle les deux éléments 2 ne prennent pas appui sur le pneumatique de la roue 8, et une deuxième position stable dite position de blocage dans laquelle les deux éléments 2 prennent appui sur le pneumatique de manière à bloquer la roue 8, tangentiellement au pneumatique. Par position stable de blocage, on entend une position dans laquelle les deux éléments sont verrouillés sur la roue, par exemple par des moyens de blocage, tels que des clés qui verrouillent l'activation des moyens de déplacement. Le retrait des éléments d'appui par rapport à la roue nécessite un déblocage de ces moyens. La Figure 1 montre le support de fixation installé sur la roue en position de blocage dans laquelle une partie des surfaces des éléments 2 vient prendre appui respectivement sur le sol et contre un pneumatique de la roue 8.

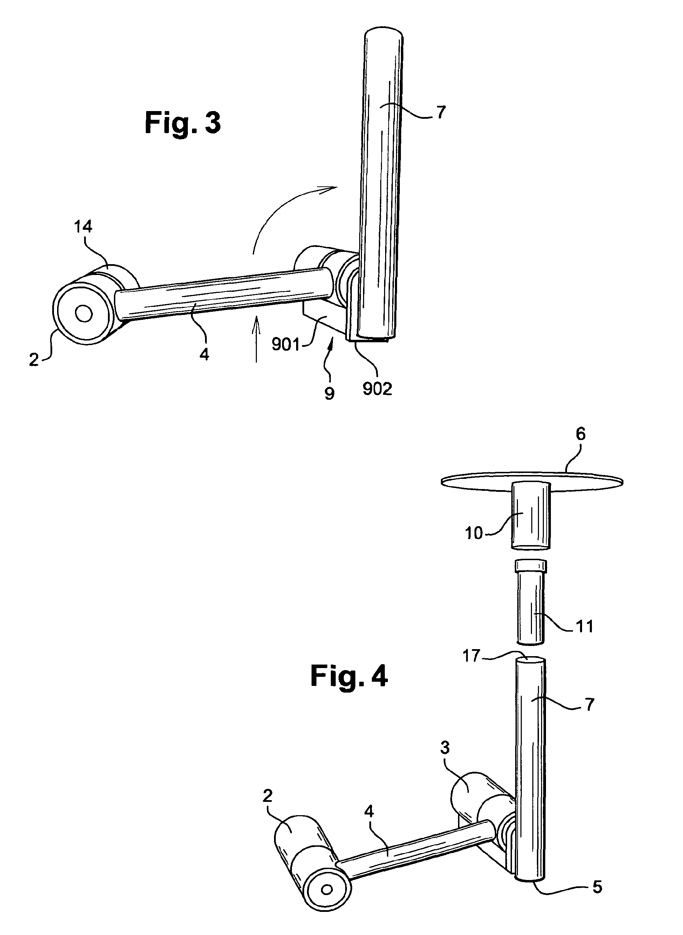

La Figure 2 et la Figure 3 illustrent plus en détail respectivement le support de fixation 1 dans sa position dite position de repos et dans sa deuxième position de blocage.

De préférence, les deux éléments 2 ont une forme cylindrique, pourvu chacun sur les faces en appui contre le sol et le pneumatique des moyens de contact antidérapants 14. Les moyens de contact antidérapants 14 sont par exemple des patins antidérapants 14 destinés à diminuer les risques de déplacement non voulu du support de fixation sur le sol. Il est possible de prévoir les moyens antidérapants sous forme de manchons recouverts de matériau antidérapant qui viennent envelopper les éléments d'appui 2.

Dans une première position dite position de repos, comme représenté sur la figure 2, les deux éléments 2 et l'axe forment une structure en U qui est destinée à venir s'insérer sur la roue par le côté, les deux éléments 2 s'étendant selon un axe parallèle à l'axe de la roue 8. La dimension de la structure en U est adaptée de telle sorte que la partie inférieure de la roue est entièrement contenue entre les deux éléments.

Les moyens de déplacement comportent un bras de levier 7 et un élément en forme U 9. Les deux bras 902 de l'élément en forme U 9 sont montés de manière rotative sur les extrémités de l'un des deux éléments d'appui 2. En outre, une extrémité du bras de levier 7 est reliée à l'extrémité de l'élément en forme de U 9. En position de repos du support de fixation, le bras de levier 7 s'étend parallèlement à l'axe 4, et l'élément en forme de U 9 parallèlement aux éléments d'appuis 2, l'agencement est tel que l'ensemble est contenu dans un même plan parallèle au plan du sol.

Dans une deuxième position dite position stable de blocage, telle que représentée sur la Figure 3, le bras de levier 7 est déplacé pour positionner dans une position verticale par rapport au plan du sol. Ce déplacement du bras de levier entraîne la rotation de l'élément en forme U 9 d'une position où l'élément U 9 est dans le même plan que lesdits éléments d'appui 2 vers une position où la base 901 dudit élément en forme de U 9 est en appui avec la surface du sol, surélevant ainsi l'élément d'appui 2 associé pour placer les éléments d'appui 2 en position de blocage.

De ce fait par sa position verticale, le bras levier 7 constitue également un organe de support particulièrement adapté pour recevoir un équipement 13 tel qu'un dispositif de surveillance. De préférence, ce dispositif de surveillance est un dispositif de surveillance périmétrique, destiné à détecter des intrusions dans un espace de sécurité défini autour d'un avion 16 qui est en stationnement sur le sol.

L'invention concerne donc également un ensemble comprenant un dispositif de surveillance 13 et un support de fixation 1 destiné à être monté sur la roue 8 d'un train d'atterrissage avant 12. L'installation du support de fixation sur le train d'atterrissage avant de l'avion est en effet la forme préférée de l'invention, en effet cet emplacement permet au dispositif de surveillance de balayer les zones particulièrement sensibles pour la sécurité de l'avion telles que les dessous de la voilure où se situent les moteurs, ainsi que les zones d'accès des trains d'atterrissage situés sous le fuselage et les trains d'atterrissage sous la voilure.

La Figure 1 illustre une telle installation du support de fixation sur un train d'atterrissage.

Le dispositif de surveillance 13 est monté sur le bras de levier 7 en position verticale par l'intermédiaire d'un plateau 6. De préférence, le bras de levier ou l'organe support 7 est agencé par rapport aux éléments d'appui 2 de sorte que le dispositif de surveillance est déporté de la jambe du train avant, permettant ainsi de ne pas gêner le champ de surveillance du dispositif de surveillance.

Par ailleurs, la longueur longitudinale du bras est prédéfinie de sorte que l'installation du dispositif de surveillance sur le plateau 6 ne soit pas gênée par les trappes en position d'ouverture (non représentées sur les figures). De préférence, la longueur du bras de levier est de 40 cm.

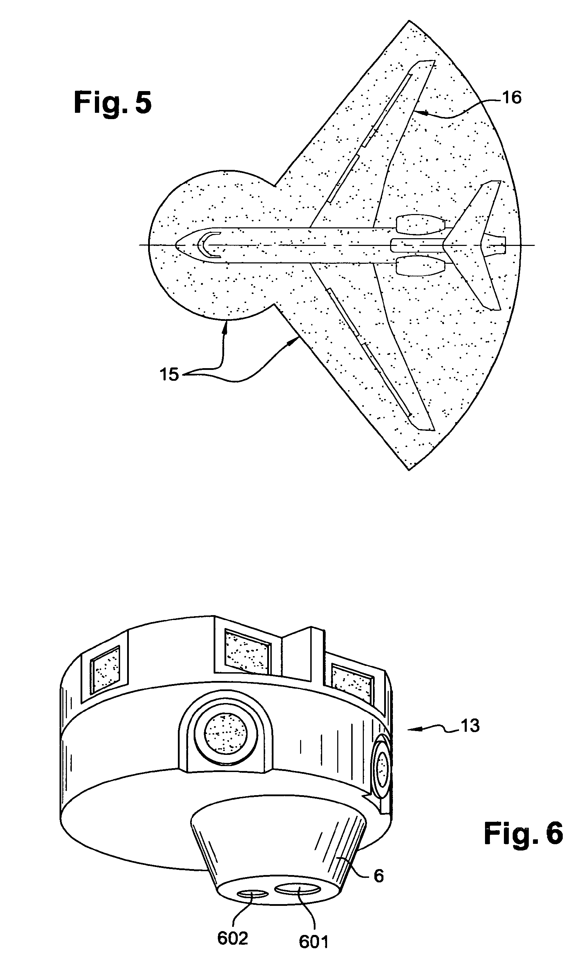

Selon l'invention, le dispositif de surveillance 13, tel que montré sur la Figure 6 comporte un ensemble de détecteur infrarouge, un ensemble de capteurs d'images, des moyens de réception et de transmission d'informations, un mémoire de stockage et un calculateur. L'espace à surveiller autour de l'avion est défini par l'agencement entre les détecteurs et les capteurs.

La figure 5 montre un exemple d'espace de sécurité 15 défini autour de l'avion selon une vue de dessus. Cet espace de surveillance est composé d'un premier espace de surveillance ayant une forme circulaire dont le centre du cercle est sensiblement le train d'atterrissage avant de l'avion et d'un deuxième espace de surveillance qui couvre jusqu'aux extrémité des ailes ainsi que l'extrémité de l'empennage de l'avion. De manière à limiter les trous de surveillance, des recouvrements sont prévus entre les deux espaces ainsi définis.

Avantageusement, en combinaison avec ces moyens de surveillance périmétrque, le dispositif de surveillance 13 comporte de plus des moyens aptes à initialiser un réseau de capteurs placés dans l'aéronef et à recevoir des informations émises par lesdits capteurs. Ces capteurs sont des capteurs d'état d'ouverture ou de fermeture des accès externes de l'avion, tels que les portes et les trappes. Ces capteurs d'intrusion sont des petits ensembles électroniques autonomes équipés chacun d'un émetteur radio courte distance et d'un actionneur mécanique. Les capteurs sont alimentés par une source d'énergie autonome telle qu'une pile jetable.

La présence de ces capteurs permet d'apporter un niveau de sécurité supplémentaire par rapport à la surveillance périmétrique. Ainsi un individu qui aurait pu pénétrer dans la zone de surveillance périmétrique sans être détecté, peut être détecté lorsqu'il tente d'ouvrir une porte ou une trappe. Le changement d'état de la porte associée est transmis sous forme d'un message vers le dispositif de surveillance, qui simultanément l'enregistre dans son unité de mémoire, et le retransmet à son tour vers le central de surveillance.

Le dispositif de surveillance se présente sous la forme d'un boîtier de 400 mm diamètre environ pour un poids total de 5 à 7 Kilos. Il permet d'assurer une surveillance périmétrique autour de l'avion et sous l'avion incluant les trains d'atterrissage, les zones de moteurs et la voilure. Les composants internes du dispositif de surveillance comprennent donc essentiellement des détecteurs infrarouges qui sont paramétrables en longueur et angle de détection, typiquement, de 3 à 25 mètres pour une zone de 90 degrés d'angle. Ces détecteurs sont installés à une hauteur de 0, 5m par rapport au sol. Ces détecteurs peuvent fonctionner à des températures extrêmes, variant entre -30°C à 50°C. La détection infrarouge est associée à des capteurs vidéo de type CCD qui peuvent réaliser des photos de nuit. Bien entendu, il n'est pas nécessaire que les caméras soient en fonctionnement continu. Le fonctionnement de ces dernières est déclenché uniquement après la détection du capteur, soit de manière automatique, soit uniquement déclenché à distance par un opérateur en cas de doute.

Le dispositif de surveillance comporte également une unité de mémoire permettant d'enregistrer toutes les données collectées pendant le stationnement de l'avion pour constituer le journal de bord et un calculateur principal qui permet de traiter les données en temps réel tel que le traitement d'images. Ce calculateur assurer également la gestion de l'ensemble des composants électroniques.

Le protocole de transmission des messages vers le central de surveillance et vers l'utilisateur s'effectue de manière connue. Les informations (images, vidéos et alarme) sont stockées dans l'unité de mémoire ayant une grande capacité d'enregistrement. Simultanément, le dispositif de surveillance appelle un serveur sécurisé via un réseau satellite où sont stockées l'ensemble des informations relatives au client. L'interface HTML du serveur permet au client (pilote de l'avion, le propriétaire, service technique) une consultation instantanée. Ce serveur retransmet toutes les alarmes en mode SMS, MMS ou email notifiant la date et heure de l'alarme, ainsi que l'image vidéo associée.

La transmission des messages depuis le dispositif de surveillance vers le serveur est assurée à la fois par un réseau de téléphone sans fil et par le réseau satellite. Ce double système de télécommunication permet d'assurer une transmission en cas de dysfonctionnement de l'un des deux modes de transmission. Le réseau téléphonique sans fil est également utilisé pour recevoir des ordres directement du serveur et réaliser des levées de doute vidéo pilotées par des opérateurs.

D'après la Figure 4, le bras de levier ou organe support 7 qui est de préférence en aluminium, comporte un plateau de fixation 6 destiné à recevoir le dispositif de surveillance 13. Le plateau 6 comporte sur sa partie inférieure un élément de fixation 10 destiné à venir se fixer sur l'extrémité du bras levier 7 qui est placé au préalable en position verticale.

La fixation du dispositif de surveillance par rapport au plateau peut s'effectuer de manière connue, notamment par vissage.

Dans une autre forme préférée de l'invention, le support de fixation n'ayant pas pourvu de plateau de fixation, le boîtier du dispositif de surveillance comporte directement une extrémité inférieure 6 qui vient se fixer sur l'extrémité de l'organe de support. Selon la Figure 6, cette extrémité 6 est munie d'un logement de fixation 601 destiné à recevoir une extrémité du bras 7 et elle est pourvue également d'un moyen de verrouillage 602 permettant de verrouiller le retrait du boîtier par rapport au support de fixation.

De manière avantageuse, le bras levier 7 comporte sur au moins une partie du côté de son extrémité libre un logement. Par extrémité libre, on entend l'extrémité qui n'est pas reliée à l'élément en forme de U 9 qui constitue avec les éléments d'appui 2 un socle. Ce logement 17 est particulièrement adapté pour recevoir une source d'alimentation 11 telle qu'une batterie pour alimenter ledit dispositif de surveillance 13. De préférence, le bloc batterie est accessible soit en enlevant le plateau 6 soit en enlevant une partie mobile du bras de levier par exemple. On peut prévoir un indicateur de l'état de charge de la batterie de manière à pouvoir procéder à la recharge lorsque l'ensemble n'est pas en service.

Ainsi, le dispositif de surveillance est entièrement indépendant de l'avion électriquement et physiquement. Il ne peut pas interférer avec le fonctionnement des autres organes de l'avion, car il est installé uniquement sur l'avion lorsque ce dernier est en stationnement, par voie de conséquence le dispositif de surveillance ne génère plus de problème de perturbations aérodynamiques. De ce fait on n'a plus de contrainte de dimension pour concevoir le dispositif de surveillance. En outre, son installation ne nécessite plus de ménager une structure d'accueil spécifique au sein du fuselage de l'avion ou dans une autre zone de l'avion, car le support de fixation permet de solidariser de manière temporaire le dispositif de surveillance sur l'avion. L'installation et la désinstallation de l'ensemble sont très simples grâce à l'utilisation du bras de levier.

De préférence, pour tenir compte de l'environnement sévère de la zone dans laquelle est installée souvent le dispositif de surveillance, le boîtier dans lequel sont installés les différents composants électroniques constituant le dispositif est défini de manière à pouvoir fonctionner à des températures extrêmes, pourvue éventuellement d'une protection foudre.

Selon l'invention, le support de fixation 1 peut être utilisé également tout seul en tant que dispositif de blocage pour bloquer une roue d'un avion en période de stationnement. Un tel dispositif de blocage permet stabiliser l'avion sur un tarmac en interdisant tout éventuel mouvement ou glissement de l'avion sur le sol.

Les cales connues pour aéronef ne donnent pas entière satisfaction. Elles ne peuvent pas être facilement manipulées. Elles sont constituées généralement en une pièce tubulaire En effet, une fois posées sur le sol, et disposé en regard des roues à bloquer, les cales sont partiellement écrasés sous les roues sous l'effet de la masse de l'avion, aussi il n'est plus possible de retirer les cales, souvent il est nécessaire de faire reculer l'avion pour libérer les cales.

Le dispositif de blocage de l'invention permet une manipulation plus aisée en présentant deux éléments d'appui 2 reliés entre eux par un axe 4. L'un des deux éléments est mobile par rapport au deuxième élément au moyen d'un bras de levier 7, de manière à placer les deux éléments en position d'appui contre le pneumatique de la roue. Ainsi, on place les éléments d'appui 2 du dispositif de blocage en position dite de repos sur la partie inférieure de la roue du train d'atterrissage, les éléments s'étendant selon un axe parallèle à l'axe de la roue. Le placement s'effectue par le côté de la roue, et à ce moment là, les éléments d'appui 2 ne sont pas encore au contact de la roue. Les éléments d'appui 2 sont entièrement libres dans leur déplacement par rapport à la roue. Puis, on soulève le bras de levier 7 vers une position verticale par rapport au sol, de manière à ce que les éléments viennent en appui contre la roue et la bloque. Lorsqu'on souhaite retirer le dispositif de blocage, il suffit de faire déplacer le bras de levier 7 vers sa position initiale, qui s'étend alors parallèlement à l'axe 4.

De manière générale, un train d'atterrissage comporte deux roues situées dans un même plan. Pour bloquer une avancée de l'avion par le dispositif de blocage de l'invention, il peut être intéressant de disposer d'un dispositif de blocage sur chacune des roues.

## Revendications

1. Support de fixation (1) pour installer de manière temporaire un équipement (13) sur une roue (8) d'un aéronef ou d'un véhicule le support de fixation comprentant :
- deux éléments d'appuis (2) reliés entre eux par un axe (4) formant un plan l'un avec l'autre, lesdits éléments (2) étant destinés à venir prendre appui respectivement sur le sol et contre un pneumatique de ladite roue (8), lesdites éléments (2) s'étendant selon un axe parallèle à l'axe de la roue, et
- des moyens de déplacement (7, 9) permettant de placer lesdits éléments (2) dans une première position inactive dans laquelle les deux éléments (2) ne prennent pas appui sur le pneumatique, et une deuxième position dite position de blocage dans laquelle les deux éléments (2) prennent appui sur le pneumatique de manière à bloquer la roue (8), tangentiellement audit pneumatique, lesdits moyens comportant un bras de levier (7), **caractérisé en ce qu'** une extrémité dudit bras de levier (7) est reliée à l'extrémité d'un élément en forme de U (9), les deux bras (902) dudit élément en forme de U étant montés de manière rotative respectivement sur les extrémités de l'un des deux éléments d'appui (2), et ledit bras de levier (7) est destiné à être déplacé d'une position horizontale dans laquelle ledit bras de levier (7) s'étend parallèlement à l'axe (4), vers une position verticale, entraînant la rotation dudit élément en forme U (9) d'une position où ledit élément U (9) est dans le même plan que lesdits éléments d'appui en position inactive vers une position où la base (901) dudit élément en forme de U (9) est en appui avec la surface du sol, surélevant ainsi ledit élément d'appui (2) correspondant pour placer lesdits éléments d'appui (2) en position de blocage.

2. Support de fixation selon la revendication 1, **caractérisé en ce que** ledit bras de levier (7) constitue également un organe de support destiné à recevoir ledit équipement (13).

3. Support de fixation selon la revendication 1 ou 2, **caractérisé en ce que** lesdits éléments d'appui (2) ayant une forme cylindrique, comportent au moins une partie des surfaces d'appui recouvertes d'un matériau antidérapant (14).

4. Support de fixation selon l'une des revendications précédentes, **caractérisé en ce que** ladite roue (8) est une des roues d'un train d'atterrissage (12) d'un aéronef.

5. Support de fixation selon la revendication 4, **caractérisé en ce que** ledit équipement (13) est un dispositif de surveillance destiné à détecter des intrusions dans un espace d sécurité (15) défini autour dudit aéronef (16).

6. Utilisation du support de fixation selon l'une des revendications 1 à 5 pour bloquer les roues d'un train d'atterrissage d'aéronef en période de stationnement, **caractérisé en ce que** les éléments d'appui (2) sont destinés à prendre appui respectivement sur le sol et contre un pneumatique d'une roue d'au moins un train d'atterrissage (12) de manière à bloquer l'avancement dudit aéronef.

7. Utilisation selon la revendication 6, **caractérisé en ce que** ledit train d'atterrissage (12) est un train d'atterrissage avant dudit aéronef.

8. Ensemble comprenant un dispositif de surveillance (13) et un support de fixation (1) destiné à être monté sur la roue (8) d'un train d'atterrissage (12) d'aéronef selon l'une des revendications 1 à 5, **caractérisé en ce que**
- ledit dispositif de surveillance (13) est monté sur le bras de levier (7) en position verticale dudit support de fixation par l'intermédiaire d'un plateau (6), ledit support (1) étant monté sur ladite roue dudit train de sorte que ledit dispositif de surveillance (13) est déporté par rapport à la jambe (18) dudit train ; et **en ce que**
- ledit dispositif de surveillance (13) comporte un ensemble de détecteur infrarouge, un ensemble de capteurs d'images, des moyens de réception et de transmission d'informations, un mémoire de stockage et un calculateur.

9. Ensemble selon la revendication 8, **caractérisé en ce que** ledit dispositif de surveillance (13) comporte de plus des moyens aptes à initialiser un réseau de capteurs placés dans l'aéronef et à recevoir des informations émises par lesdits capteurs.

10. Ensemble selon la revendication 9, **caractérisé en ce que** lesdits capteurs sont des capteurs d'état d'ouverture ou de fermeture des accès externes de l'avion, tels que les portes et les trappes.

11. Ensemble selon la revendication 8 ou 9, **caractérisé en ce que** chacun des capteurs formant ledit réseau est muni d'un émetteur radio courte distance, d'un actionneur mécanique et d'une source d'énergie telle qu'une pile jetable.

12. Ensemble selon l'une des revendications 8 à 11, **caractérisé en ce que** ledit dispositif de surveillance (13) comporte sur sa partie inférieure une extrémité de fixation (6) destiné à venir se fixer sur l'extrémité dudit bras levier (7) en position verticale.

13. Ensemble selon la revendication 12, **caractérisé en ce que** ledit bras levier (7) comporte sur au moins une partie du côté de son extrémité libre un logement, ledit logement étant destiné à recevoir une source d'alimentation (11) telle qu'une batterie pour alimenter ledit dispositif de surveillance.

## Claims

1. Attachment support (1) for temporarily installing an item of equipment (13) on a wheel (8) of an aircraft or of a vehicle, the attachment support comprising:
- two bearing elements (2) connected together by a shaft (4) forming a plane with one another, the said elements (2) being designed to rest respectively on the ground and against a tyre of the said wheel (8), said elements (2) extending along an axis parallel to the axis of the wheel, and
- motion means (7, 9) making it possible to place the said elements (2) in a first inactive position in which the two elements (2) do not rest on the tyre, and a second position called the locking position in which the two elements (2) rest on the tyre so as to immobilize the wheel (8), tangentially to the said tyre, the said means comprising a lever arm (7),
**characterized in that** one end of the said lever arm (7) is connected to the end of a U-shaped element (9), the two arms (902) of the said U-shaped element being mounted rotatably respectively on the ends of one of the two bearing elements (2), and the said lever arm (7) is designed to be moved from a horizontal position, in which the said lever arm (7) extends parallel to the shaft (4), to a vertical position, causing the said U-shaped element (9) to rotate from a position in which the said U-shaped element (9) is in the same plane as the said bearing elements in the inactive position to a position in which the base (901) of the said U-shaped element (9) is resting on the surface of the ground, thus raising the said corresponding bearing element (2) in order to place the said bearing elements (2) in the locking position.

2. Attachment support according to Claim 1, **characterized in that** the said lever arm (7) also forms a supporting member designed to receive the said item of equipment (13).

3. Attachment support according to Claim 1 or 2, **characterized in that** the said bearing elements (2), having a cylindrical shape, comprise at least one portion of the bearing surfaces covered with an anti-skid material (14).

4. Attachment support according to one of the preceding claims, **characterized in that** the said wheel (8) is one of the wheels of a landing gear (12) of an aircraft.

5. Attachment support according to Claim 4, **characterized in that** the said item of equipment (13) is a monitoring device designed to detect intrusions into a security space (15) defined around the said aircraft (16).

6. Use of an attachment support according to one of Claims 1 to 5 in order to immobilize the wheels of an aircraft landing gear duping a parking period, **characterized in that** the bearing elements (2) are designed to rest respectively on the ground and against a tyre of a wheel of at least one landing gear (12) so as to block the forward movement of the said aircraft.

7. Use according to Claim 6, **characterized in that** the said landing gear (12) is a front landing gear of the said aircraft.

8. Assembly comprising a monitoring device (13) and an attachment support (1) designed to be mounted on the wheel (8) of a landing gear (12) of an aircraft according to one of Claims 1 to 5, **characterized in that**
- the said monitoring device (13) is mounted on the lever arm (7) in the vertical position of the said attachment support by way of a plate (6), the said support (1) being mounted on the said wheel of the said landing gear such that the said monitoring device (13) is offset relative to the leg (18) of the said landing gear; and **in that**
- the said monitoring device (13) comprises an infrared detecting assembly, an assembly of image sensors, means for receiving and transmitting information, a storage memory and a computer.

9. Assembly according to Claim 8, **characterized in that** the said monitoring device (13) also comprises means capable of initializing a network of sensors placed in the aircraft and of receiving information transmitted by the said sensors.

10. Assembly according to Claim 9, **characterized in that** the said sensors are sensors for sensing the open or closed state of the external access points, such as the doors and the hatches.

11. Assembly according to Claim 8 or 9, **characterized in that** each of the sensors forming the said network is furnished with a short-range radio transmitter, a mechanical actuator and a power source such as a disposable battery.

12. Assembly according to one of Claims 8 to 11, **characterized in that** the said monitoring device (13) comprises, on its lower portion, an attachment end (6) designed to be attached to the end of the said lever arm (7) in the vertical position.

13. Assembly according to Claim 12, **characterized in that** the said lever arm (7) comprises, on at least one portion of the side of its free end, a housing, the said housing being designed to receive a power supply source (11) such as a battery in order to power the said monitoring device.

## Patentansprüche

1. Befestigungsträger (1) zur temporären Anbringung einer Ausrüstung (13) auf einem Rad (8) eines Luftfahrzeugs oder eines Fahrzeugs, wobei der Befestigungsträger enthält:
- zwei durch eine Achse (4) miteinander verbundene Auflageelemente (2), die miteinander eine Ebene formen, wobei die Elemente (2) dazu bestimmt sind, auf dem Boden und gegen einen Reifen des Rads (8) aufzuliegen, wobei die Elemente (2) sich gemäß einer Achse parallel zur Achse des Rads erstrecken, und
- Verschiebeeinrichtungen (7, 9), die es ermöglichen, die Elemente (2) in einer ersten inaktiven Stellung, in der die zwei Elemente (2) nicht am Luftreifen aufliegen, und einer zweiten, so genannten Blockierstellung anzuordnen, in der die zwei Elemente (2) am Luftreifen aufliegen, um das Rad (8) tangential zum Luftreifen zu blockieren, wobei die Einrichtungen einen Hebelarm (7) aufweisen,
**dadurch gekennzeichnet, dass** ein Ende des Hebelarms (7) mit dem Ende eines U-förmigen Elements (9) verbunden ist, wobei die zwei Schenkel (902) des U-förmigen Elements je drehbar an die Enden des einen der zwei Auflageelemente (2) montiert sind, und der Hebelarm (7) dazu bestimmt ist, von einer waagrechten Stellung, in der der Hebelarm (7) sich parallel zur Achse (4) erstreckt, in eine senkrechte Stellung verschoben zu werden, indem er das Drehen des U-förmigen Elements (9) von einer Stellung, in der das U-förmige Element (9) sich in der gleichen Ebene befindet wie die Auflageelemente in der inaktiven Stellung, in eine Stellung zu verschieben, in der die Basis (901) des U-förmigen Elements (9) mit der Oberfläche des Bodens in Auflage ist, wodurch das entsprechende Auflageelement (2) angehoben wird, um die Auflageelemente (2) in die Blockierstellung zu bringen.

2. Befestigungsträger nach Anspruch 1, **dadurch gekennzeichnet, dass** der Hebelarm (7) ebenfalls ein Tragorgan bildet, das dazu bestimmt ist, die Ausrüstung (13) aufzunehmen.

3. Befestigungsträger nach Anspruch 1 oder 2, **dadurch gekennzeichnet, dass** die Auflageelemente (2) zylindrischer Form mindestens einen Teil der Auflageflächen mit einem Gleitschutzmaterial (14) bedeckt aufweisen.

4. Befestigungsträger nach einem der vorhergehenden Ansprüche, **dadurch gekennzeichnet, dass** das Rad (8) eines der Räder eines Fahrwerks (12) eines Luftfahrzeugs ist.

5. Befestigungsträger nach Anspruch 4, **dadurch gekennzeichnet, dass** die Ausrüstung (13) eine Überwachungsvorrichtung ist, die dazu bestimmt ist, Eindringungen in einen Sicherheitsbereich (15) zu erfassen, der um das Luftfahrzeug (16) herum definiert ist.

6. Verwendung des Befestigungsträgers nach einem der Ansprüche 1 bis 5 zum Blockieren der Räder eines Luftfahrzeug-Fahrwerks während einer Parkzeit, **dadurch gekennzeichnet, dass** die Auflageelemente (2) dazu bestimmt sind, sich auf den Boden und gegen einen Luftreifen eines Rads mindestens eines Luftfahrzeug-Fahrwerks (12) aufzulegen, um die Vorwärtsbewegung des Luftfahrzeugs zu blockieren.

7. Verwendung nach Anspruch 6, **dadurch gekennzeichnet, dass** das Luftfahrzeug-Fahrwerk (12) ein Bugfahrwerk des Luftfahrzeugs ist.

8. Einheit, die eine Überwachungsvorrichtung (13) und einen Befestigungsträger (1) enthält, die dazu bestimmt ist, auf das Rad (8) eines Luftfahrzeug-Fahrwerks (12) nach einem der Ansprüche 1 bis 5 montiert zu werden, **dadurch gekennzeichnet, dass**
- die Überwachungsvorrichtung (13) auf den Hebelarm (7) des Befestigungsträgers in senkrechter Stellung mittels einer Platte (6) montiert wird, wobei der Träger (1) so auf das Rad des Luftfahrzeug-Fahrwerks montiert wird, dass die Überwachungsvorrichtung (13) bezüglich der Strebe (18) des Luftfahrzeug-Fahrwerks versetzt ist;
und dass
- die Überwachungsvorrichtung (13) eine Infrarotdetektoreinheit, eine Einheit von Bilderfassungssensoren, Einrichtungen zum Empfang und zur Übertragung von Informationen, einen Speicher und einen Rechner aufweist.

9. Einheit nach Anspruch 8, **dadurch gekennzeichnet, dass** die Überwachungsvorrichtung (13) außerdem Einrichtungen aufweist, die ein Netz von im Luftfahrzeug angeordneten Sensoren initialisieren und von den Sensoren gesendete Informationen empfangen können.

10. Einheit nach Anspruch 9, **dadurch gekennzeichnet, dass** die Sensoren Zustandssensoren der Öffnung oder Schließung der externen Zugänge des Flugzeugs wie die Türen und die Klappen sind.

11. Einheit nach Anspruch 8 oder 9, **dadurch gekennzeichnet, dass** jeder der das Netz bildenden Sensoren mit einem Kurzstrecken-Funksender, einem mechanischen Betätigungselement und mit einer Energiequelle wie einer Wegwerfbatterie versehen ist.

12. Einheit nach einem der Ansprüche 8 bis 11, **dadurch gekennzeichnet, dass** die Überwachungsvorrichtung (13) an ihrem unteren Teil ein Befestigungsende (6) aufweist, das dazu bestimmt ist, am Ende des Hebelarms (7) in der senkrechten Stellung befestigt zu werden.

13. Einheit nach Anspruch 12, **dadurch gekennzeichnet, dass** der Hebelarm (7) über mindestens einen Bereich auf der Seite seines freien Endes eine Aufnahme aufweist, wobei die Aufnahme dazu bestimmt ist eine Versorgungsquelle (11) wie eine Batterie aufzunehmen, um die Überwachungsvorrichtung zu versorgen.
